# EUROPEAN PATENT SPECIFICATION

(11) **EP 2 433 450 B1**
(45) Date of publication and mention of the grant of the patent: **11.03.2020**
(21) Application number: 10722250.7
(22) Date of filing: 21.05.2010
(51) Int. Cl.: H04W 56/00, H04J 3/06

(54) **SYSTEMS AND METHODS FOR JOINT PROCESSING IN A WIRELESS COMMUNICATION**
SYSTEMS AND METHODS FOR JOINT PROCESSING IN A WIRELESS COMMUNICATION
SYSTÈMES ET PROCÉDÉS PERMETTANT DE RÉALISER UN TRAITEMENT CONJOINT DANS UN PROCÉDÉ DE COMMUNICATION SANS FIL

(30) Priority: 22.05.2009 US 18073809 P; 27.05.2009 US 181580 P; 20.05.2010 US 783766
(43) Date of publication of application: 28.03.2012
(73) Proprietor: QUALCOMM Incorporated, San Diego, CA 92121 (US)
(72) Inventor: PALANKI, Ravi, San Diego, California 92121 (US); GOROKHOV, Alexei, Y., San Diego, California 92121 (US)
(74) Representative: Wegner, Hans
(86) International application number: PCT/US2010/035865
(87) International publication number: WO 2010/135712

(56) References cited:
- WO-A1-98/09390
- WO-A1-99/44306
- DE-A1- 10 032 934
- US-A1- 2001 022 779
- CATT: "Aspects of Joint Processing for Downlink CoMP", 3GPP DRAFT; R1-090942, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Athens, Greece; 20090204, 4 February 2009 (2009-02-04), XP050318782, [retrieved on 2009-02-04]
- FUJITSU: "Coherent and Non-Coherent DL CoMP Transmission for LTE-A", 3GPP DRAFT; R1-091493, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Seoul, Korea; 20090318, 18 March 2009 (2009-03-18), XP050339054, [retrieved on 2009-03-18]

## Description

### BACKGROUND

### Field

The present disclosure relates generally to communication systems, and more particularly, to a system and method for joint processing in a wireless communication.

### Background

Wireless communication systems are widely deployed to provide various telecommunication services such as telephony, video, data, messaging, and broadcasts. Typical wireless communication systems may employ multiple-access technologies capable of supporting communication with multiple users by sharing available system resources (e.g., bandwidth, transmit power). Examples of such multiple-access technologies include code division multiple access (CDMA) systems, time division multiple access (TDMA) systems, frequency division multiple access (FDMA) systems, orthogonal frequency division multiple access (OFDMA) systems, single-carrier frequency divisional multiple access (SC-FDMA) systems, and time division synchronous code division multiple access (TD-SCDMA) systems.

These multiple access technologies have been adopted in various telecommunication standards to provide a common protocol that enables different wireless devices to communicate on a municipal, national, regional, and even global level. An example of an emerging telecommunication standard is Long Term Evolution (LTE). LTE is a set of enhancements to the Universal Mobile Telecommunications System (UMTS) mobile standard promulgated by Third Generation Partnership Project (3GPP). It is designed to better support mobile broadband Internet access by improving spectral efficiency, lower costs, improve services, make use of new spectrum, and better integrate with other open standards using OFDMA on the downlink (DL), SC-FDMA on the uplink (UL), and multiple-input multiple-output (MIMO) antenna technology. However, as the demand for mobile broadband access continues to increase, there exists a need for further improvements in LTE technology. Preferably, these improvements should be applicable to other multi-access technologies and the telecommunication standards that employ these technologies.

US 2001/022779 A1 discloses that the slave base station attains synchronization with the reference base station through messages transmitted from and received by a mobile station either in the soft handoff region between the reference base station and the slave base station or within a range which allows the mobile station to communicate with the slave base station. When the mobile station is not in communication with both the reference base station and the slave base station, then the round-trip delay between the mobile station and the reference base station is measured by the reference base station. The reference base station communicates the PN code used by the mobile station over the reverse link to the slave base station. The slave base station acquires the signal from the mobile station and determines when the signal from the mobile station arrives. The slave base station then makes and estimate as to the length of the delay between transmission of a signal from the mobile station to the slave base station. Based upon these measurements and estimates, the slave base station determines the error which is present in the slave base station system time.

CATT: "Aspects of Joint Processing for Downlink CoMP", 3GPP TSG RAN WGi meeting #56, R1-090942, February 9-13, 2009 discloses single-layer joint processing for downlink CoMP. Several cooperation techniques are analyzed, and both link-level and system-level evaluation results are provided.

FUJITSU: "Coherent and Non-Coherent DL CoMP Transmission for LTE-A", 3GPP TSG-RAN1 #56-BIS, R1-091493, March 23-27, 2009 discloses joint processing/transmission with single UE targeting scenario. CoMP transmissions are categorized into three types and the signal and interference-to-noise ratio (SINR) is formulated.

### SUMMARY

The invention is defined by the independent claims. In an aspect of the disclosure, a method, an apparatus, and a computer program product arc provided in which a signal is received from a plurality of base stations and a measurement is made of at least one synchronization parameter between the plurality of base stations. In addition, a signal is transmitted to at least one of the plurality of base stations with information about the at least one synchronization parameter.

In an aspect of the disclosure, a method, an apparatus, and a computer program product are provided in which a base station transmits a signal to a user equipment and receives a signal from the user equipment with information regarding at least one synchronization parameter between the base station and at least one other base station. In addition, an offset is determined in the received at least one synchronization parameter between the base station and the at least one other base station, and an adjustment is made to a transmission waveform at the base station based on the determined offset.

### BRIEF DESCRIPTION OF THE DRAWINGS

FIG. 1 is a diagram illustrating an example of a hardware implementation for an apparatus employing a processing system.
FIG. 2 is a diagram illustrating an example of a network architecture.
FIG. 3 is a diagram illustrating an example of an access network.
FIG. 4 is a diagram illustrating an example of a frame structure for use in an access network.
FIG. 5 shows an exemplary format for the UL in LTE.
FIG. 6 is a diagram illustrating an example of a radio protocol architecture for the user and control plane.
FIG. 7 is a diagram illustrating an example of an eNodeB and UE in an access network.
FIG. 8 is a diagram illustrating a UE receiving signals from multiple transmitters.
FIG. 9 is a diagram illustrating overlapping wireless communication cells.
FIG. 10 is a chart illustrating a manner of reporting and adjusting for an offset in synchronization parameters between multiple transmission signals
FIG. 11 is a flow chart of a method of wireless communication.
FIG. 12 is a flow chart of a method of wireless communication.
FIG. 13 is a conceptual block diagram illustrating the functionality of an exemplary apparatus.
FIG. 14 is a conceptual block diagram illustrating the functionality of an exemplary apparatus.

### DETAILED DESCRIPTION

The detailed description set forth below in connection with the appended drawings is intended as a description of various configurations and is not intended to represent the only configurations in which the concepts described herein may be practiced. The detailed description includes specific details for the purpose of providing a thorough understanding of various concepts. However, it will be apparent to those skilled in the art that these concepts may be practiced without these specific details. In some instances, well known structures and components are shown in block diagram form in order to avoid obscuring such concepts.

Several aspects of telecommunication systems will now be presented with reference to various apparatus and methods. These apparatus and methods will be described in the following detailed description and illustrated in the accompanying drawing by various blocks, modules, components, circuits, steps, processes, algorithms, etc. (collectively referred to as "elements"). These elements may be implemented using electronic hardware, computer software, or any combination thereof. Whether such elements are implemented as hardware or software depends upon the particular application and design constraints imposed on the overall system.

By way of example, an element, or any portion of an element, or any combination of elements may be implemented with a "processing system" that includes one or more processors. Examples of processors include microprocessors, microcontrollers, digital signal processors (DSPs), field programmable gate arrays (FPGAs), programmable logic devices (PLDs), state machines, gated logic, discrete hardware circuits, and other suitable hardware configured to perform the various functionality described throughout this disclosure. One or more processors in the processing system may execute software. Software shall be construed broadly to mean instructions, instruction sets, code, code segments, program code, programs, subprograms, software modules, applications, software applications, software packages, routines, subroutines, objects, executables, threads of execution, procedures, functions, etc., whether referred to as software, firmware, middleware, microcode, hardware description language, or otherwise. The software may reside on a computer-readable medium. A computer-readable medium may include, by way of example, a magnetic storage device (e.g., hard disk, floppy disk, magnetic strip), an optical disk (e.g., compact disk (CD), digital versatile disk (DVD)), a smart card, a flash memory device (e.g., card, stick, key drive), random access memory (RAM), read only memory (ROM), programmable ROM (PROM), erasable PROM (EPROM), electrically erasable PROM (EEPROM), a register, a removable disk, a carrier wave, a transmission line, and any other suitable medium for storing or transmitting software. The computer-readable medium may be resident in the processing system, external to the processing system, or distributed across multiple entities including the processing system. Computer-readable medium may be embodied in a computer-program product. By way of example, a computer-program product may include a computer-readable medium in packaging materials. Those skilled in the art will recognize how best to implement the described functionality presented throughout this disclosure depending on the particular application and the overall design constraints imposed on the overall system.

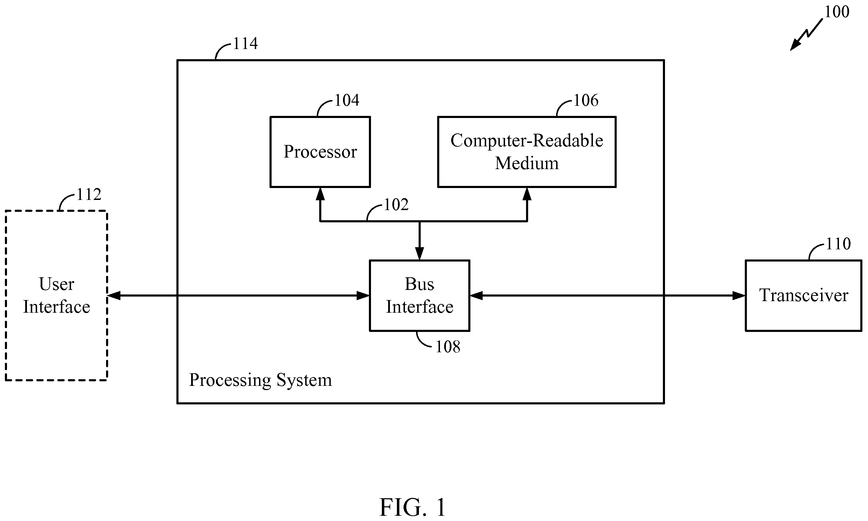

FIG. 1 is a conceptual diagram illustrating an example of a hardware implementation for an apparatus 100 employing a processing system 114. In this example, the processing system 114 may be implemented with a bus architecture, represented generally by the bus 102. The bus 102 may include any number of interconnecting buses and bridges depending on the specific application of the processing system 114 and the overall design constraints. The bus 102 links together various circuits including one or more processors, represented generally by the processor 104, and computer-readable media, represented generally by the computer-readable medium 106. The bus 102 may also link various other circuits such as timing sources, peripherals, voltage regulators, and power management circuits, which are well known in the art, and therefore, will not be described any further. A bus interface 108 provides an interface between the bus 102 and a transceiver 110. The transceiver 110 provides a means for communicating with various other apparatus over a transmission medium. Depending upon the nature of the apparatus, a user interface 112 (e.g., keypad, display, speaker, microphone, joystick) may also be provided.

The processor 104 is responsible for managing the bus 102 and general processing, including the execution of software stored on the computer-readable medium 106. The software, when executed by the processor 104, causes the processing system 114 to perform the various functions described *infra* for any particular apparatus. The computer-readable medium 106 may also be used for storing data that is manipulated by the processor 104 when executing software.

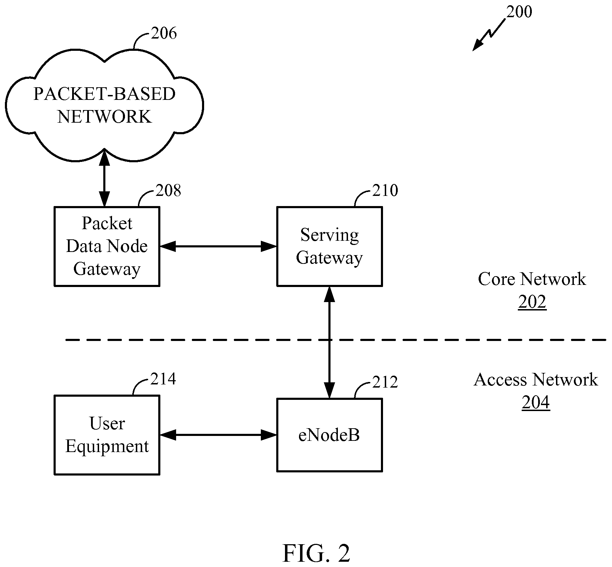

An example of a telecommunications system employing various apparatus will now be presented with reference to an LTE network architecture as shown in FIG. 2. The LTE network architecture 200 is shown with a core network 202 and an access network 204. In this example, the core network 202 provides packet-switched services to the access network 204, however, as those skilled in the art will readily appreciate, the various concepts presented throughout this disclosure may be extended to core networks providing circuit-switched services.

The access network 204 is shown with a single apparatus 212, which is commonly referred to as an evolved NodeB in LTE applications, but may also be referred to by those skilled in the art as a base station, a base transceiver station, a radio base station, a radio transceiver, a transceiver function, a basic service set (BSS), an extended service set (ESS), or some other suitable terminology. The eNodeB 212 provides an access point to the core network 202 for a mobile apparatus 214. Examples of a mobile apparatus include a cellular phone, a smart phone, a session initiation protocol (SIP) phone, a laptop, a personal digital assistant (PDA), a satellite radio, a global positioning system, a multimedia device, a video device, a digital audio player (e.g., MP3 player), a camera, a game console, or any other similar functioning device. The mobile apparatus 214 is commonly referred to as user equipment (UE) in LTE applications, but may also be referred to by those skilled in the art as a mobile station, a subscriber station, a mobile unit, a subscriber unit, a wireless unit, a remote unit, a mobile device, a wireless device, a wireless communications device, a remote device, a mobile subscriber station, an access terminal, a mobile terminal, a wireless terminal, a remote terminal, a handset, a user agent, a mobile client, a client, or some other suitable terminology.

The core network 202 is shown with several apparatus including a packet data node (PDN) gateway 208 and a serving gateway 210. The PDN gateway 208 provides a connection for the access network 204 to a packet-based network 206. In this example, the packet-based network 206 is the Internet, but the concepts presented throughout this disclosure are not limited to Internet applications. The primary function of the PDN gateway 208 is to provide the UE 214 with network connectivity. Data packets are transferred between the PDN gateway 208 and the UE 214 through the serving gateway 210, which serves as the local mobility anchor as the UE 214 roams through the access network 204.

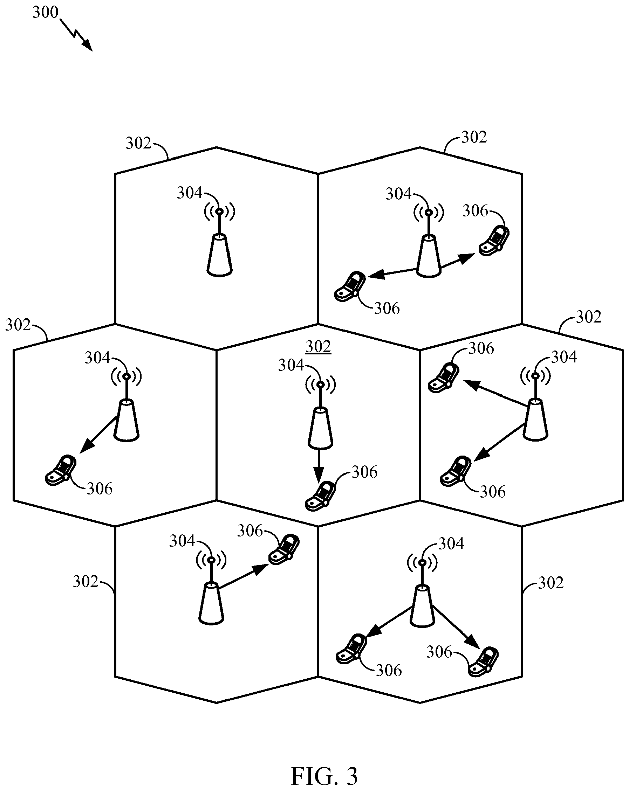

An example of an access network in an LTE network architecture will now be presented with reference to FIG. 3. In this example, the access network 300 is divided into a number of cellular regions (cells) 302. An eNodeB 304 is assigned to a cell 302 and is configured to provide an access point to a core network 202 (see FIG. 2) for all the UEs 306 in the cell 302. There is no centralized controller in this example of an access network 300, but a centralized controller may be used in alternative configurations. The eNodeB 304 is responsible for all radio related functions including radio bearer control, admission control, mobility control, scheduling, security, and connectivity to the serving gateway 210 in the core network 202 (see FIG. 2).

The modulation and multiple access scheme employed by the access network 300 may vary depending on the particular telecommunications standard being deployed. In LTE applications, OFDM is used on the DL and SC-FDMA is used on the UL to support both frequency division duplexing (FDD) and time division duplexing (TDD). As those skilled in the art will readily appreciate from the detailed description to follow, the various concepts presented herein are well suited for LTE applications. However, these concepts may be readily extended to other telecommunication standards employing other modulation and multiple access techniques. By way of example, these concepts may be extended to Evolution-Data Optimized (EV-DO) or Ultra Mobile Broadband (UMB). EV-DO and UMB are air interface standards promulgated by the 3rd Generation Partnership Project 2 (3GPP2) as part of the CDMA2000 family of standards and employs CDMA to provide broadband Internet access to mobile stations. These concepts may also be extended to Universal Terrestrial Radio Access (UTRA) employing Wideband-CDMA (W-CDMA) and other variants of CDMA, such as TD-SCDMA; Global System for Mobile Communications (GSM) employing TDMA; and Evolved UTRA (E-UTRA), Ultra Mobile Broadband (UMB), IEEE 802.11 (Wi-Fi), IEEE 802.16 (WiMAX), IEEE 802.20, and Flash-OFDM employing OFDMA. UTRA, E-UTRA, UMTS, LTE and GSM are described in documents from the 3GPP organization. CDMA2000 and UMB are described in documents from the 3GPP2 organization. The actual wireless communication standard and the multiple access technology employed will depend on the specific application and the overall design constraints imposed on the system.

The eNodeB 304 may have multiple antennas supporting MIMO technology. The use of MIMO technology enables the eNodeB 304 to exploit the spatial domain to support spatial multiplexing, beamforming, and transmit diversity.

Spatial multiplexing may be used to transmit different streams of data simultaneously on the same frequency. The data steams may be transmitted to a single UE 306 to increase the data rate or to multiple UEs 306 to increase the overall system capacity. This is achieved by spatially precoding each data stream and then transmitting each spatially precoded stream through a different transmit antenna on the downlink. The spatially precoded data streams arrive at the UE(s) 306 with different spatial signatures, which enables each of the UE(s) 306 to recover the one or more the data streams destined for that UE 306. On the uplink, each UE 306 transmits a spatially precoded data stream, which enables the eNodeB 304 to identify the source of each spatially precoded data stream.

Spatial multiplexing is generally used when channel conditions are good. When channel conditions are less favorable, beamforming may be used to focus the transmission energy in one or more directions. This may be achieved by spatially precoding the data for transmission through multiple antennas. To achieve good coverage at the edges of the cell, a single stream beamforming transmission may be used in combination with transmit diversity.

In the detailed description that follows, various aspects of an access network will be described with reference to a MIMO system supporting OFDM on the downlink. OFDM is a spread-spectrum technique that modulates data over a number of subcarriers within an OFDM symbol. The subcarriers are spaced apart at precise frequencies. The spacing provides "orthogonality" that enables a receiver to recover the data from the subcarriers. In the time domain, a guard interval (e.g., cyclic prefix) may be added to each OFDM symbol to combat inter-OFDM-symbol interference. The uplink may use SC-FDMA in the form of a DFT-spread OFDM signal to compensate for high peak-to-average power ratio (PARR).

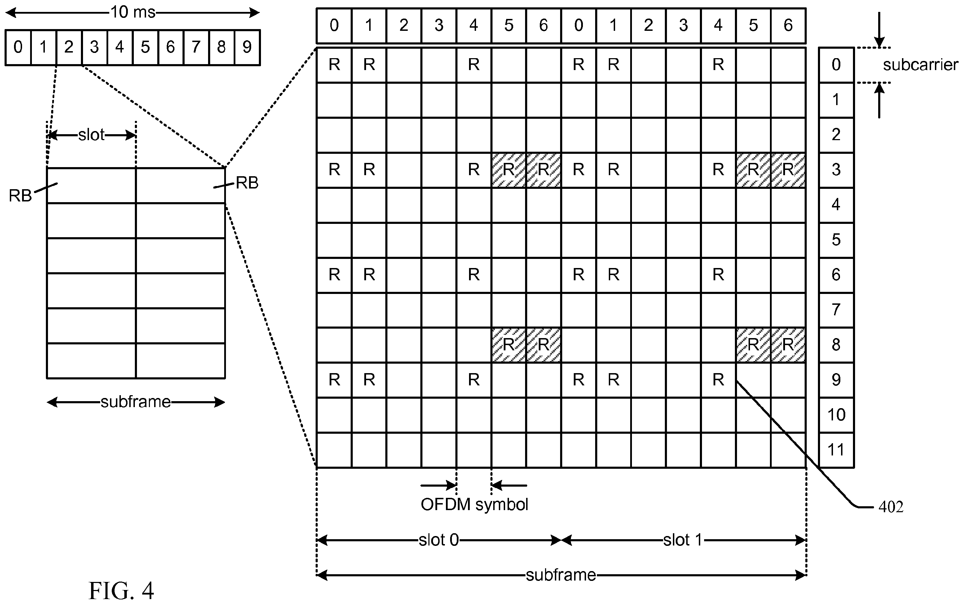

Various frame structures may be used to support the DL and UL transmissions. An example of a DL frame structure will now be presented with reference to FIG. 4. However, as those skilled in the art will readily appreciate, the frame structure for any particular application may be different depending on any number of factors. In this example, a frame (10 ms) is divided into 10 equally sized sub-frames. Each sub-frame includes two consecutive time slots.

A resource grid may be used to represent two time slots, each two time slots including a resource block. The resource grid is divided into multiple resource elements. In LTE, a resource block contains 12 consecutive subcarriers in the frequency domain and, for a normal cyclic prefix in each OFDM symbol, 7 consecutive OFDM symbols in the time domain, or 84 resource elements. Some of the resource elements, as indicated as R₀ and R₁, include a DL reference signal (DL-RS). The DL-RS include Cell-specific RS (CRS) (also sometimes called common RS) and UE-specific RS (UE-RS). UE-RS are transmitted only on the resource blocks upon which the corresponding physical downlink shared channel (PDSCH) is mapped. The number of bits carried by each resource element depends on the modulation scheme. Thus, the more resource blocks that a UE receives and the higher the modulation scheme, the higher the data rate for the UE.

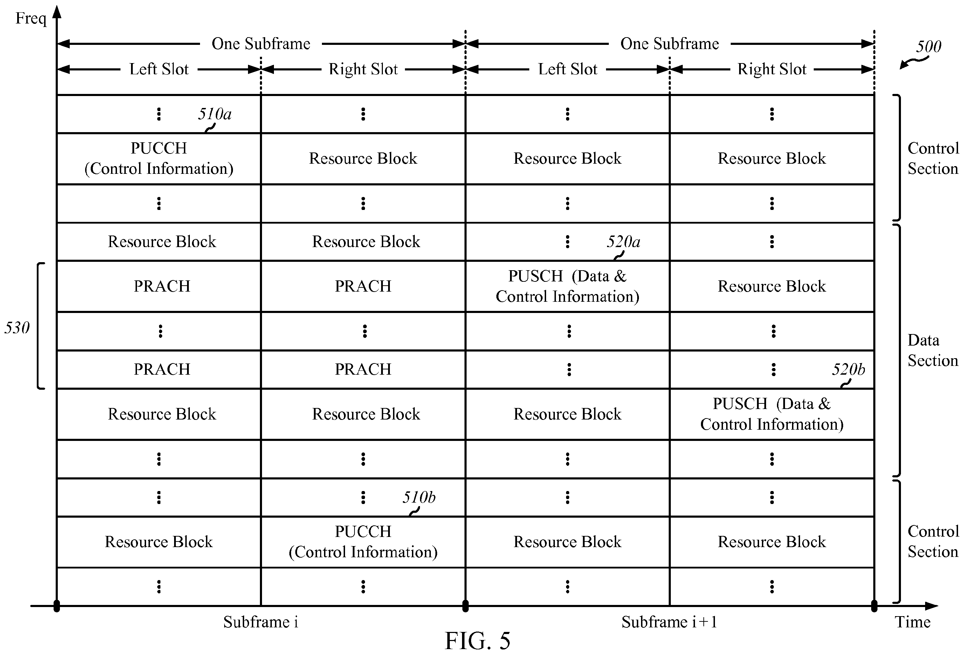

An example of an UL frame structure will now be presented with reference to FIG. 5. FIG. 5 shows an exemplary format for the UL in LTE. The available resource blocks for the UL may be partitioned into a data section and a control section. The control section may be formed at the two edges of the system bandwidth and may have a configurable size. The resource blocks in the control section may be assigned to UEs for transmission of control information. The data section may include all resource blocks not included in the control section. The design in FIG. 5 results in the data section including contiguous subcarriers, which may allow a single UE to be assigned all of the contiguous subcarriers in the data section.

A UE may be assigned resource blocks 510a, 510b in the control section to transmit control information to an eNodeB. The UE may also be assigned resource blocks 520a, 520b in the data section to transmit data to the eNodeB. The UE may transmit control information in a physical uplink control channel (PUCCH) on the assigned resource blocks in the control section. The UE may transmit only data or both data and control information in a physical uplink shared channel (PUSCH) on the assigned resource blocks in the data section. An UL transmission may span both slots of a subframe and may hop across frequency as shown in FIG. 5.

As shown in FIG. 5, a set of resource blocks may be used to perform initial system access and achieve UL synchronization in a physical random access channel (PRACH). The PRACH carries a random sequence and cannot carry any UL data/signaling. Each random access preamble occupies a bandwidth corresponding to six consecutive resource blocks. The starting frequency is specified by the network. That is, the transmission of the random access preamble is restricted to certain time and frequency resources. There is no frequency hopping for PRACH. The PRACH attempt is carried in a single subframe (1 ms) and a UE can make only a single PRACH attempt per frame (10 ms).

The PUCCH, PUSCH, and PRACH in LTE are described in 3GPP TS 36.211, entitled "Evolved Universal Terrestrial Radio Access (E-UTRA); Physical Channels and Modulation," which is publicly available.

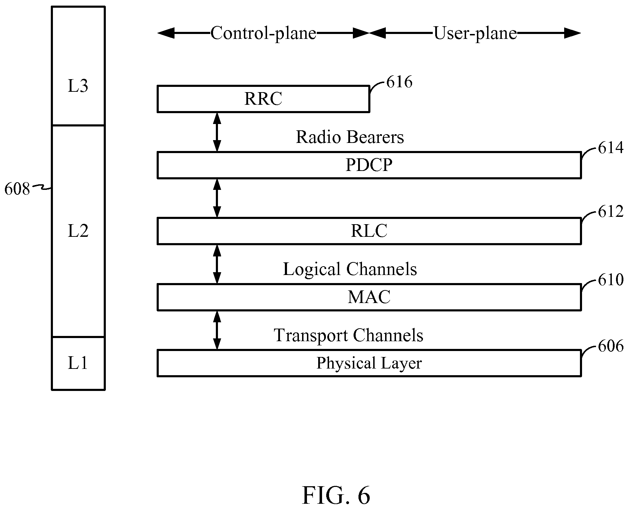

The radio protocol architecture may take on various forms depending on the particular application. An example for an LTE system will now be presented with reference to FIG. 6. FIG. 6 is a conceptual diagram illustrating an example of the radio protocol architecture for the user and control planes.

Turning to FIG. 6, the radio protocol architecture for the UE and the eNodeB is shown with three layers: Layer 1, Layer 2, and Layer 3. Layer 1 is the lowest lower and implements various physical layer signal processing functions. Layer 1 will be referred to herein as the physical layer 606. Layer 2 (L2 layer) 608 is above the physical layer 606 and is responsible for the link between the UE and eNodeB over the physical layer 606.

In the user plane, the L2 layer 608 includes a media access control (MAC) sublayer 610, a radio link control (RLC) sublayer 612, and a packet data convergence protocol (PDCP) 614 sublayer, which are terminated at the eNodeB on the network side. Although not shown, the UE may have several upper layers above the L2 layer 608 including a network layer (e.g., IP layer) that is terminated at the PDN gateway 208 (see FIG. 2) on the network side, and an application layer that is terminated at the other end of the connection (e.g., far end UE, server, etc.).

The PDCP sublayer 614 provides multiplexing between different radio bearers and logical channels. The PDCP sublayer 614 also provides header compression for upper layer data packets to reduce radio transmission overhead, security by ciphering the data packets, and handover support for UEs between eNodeBs. The RLC sublayer 612 provides segmentation and reassembly of upper layer data packets, retransmission of lost data packets, and reordering of data packets to compensate for out-of-order reception due to hybrid automatic repeat request (HARQ). The MAC sublayer 610 provides multiplexing between logical and transport channels. The MAC sublayer 610 is also responsible for allocating the various radio resources (e.g., resource blocks) in one cell among the UEs. The MAC sublayer 610 is also responsible for HARQ operations.

In the control pane, the radio protocol architecture for the UE and eNodeB is substantially the same for the physical layer 606 and the L2 layer 608 with the exception that there is no header compression function for the control plane. The control pane also includes a radio resource control (RRC) sublayer 616 in Layer 3. The RRC sublayer 616 is responsible for obtaining radio resources (i.e., radio bearers) and for configuring the lower layers using RRC signaling between the eNodeB and the UE.

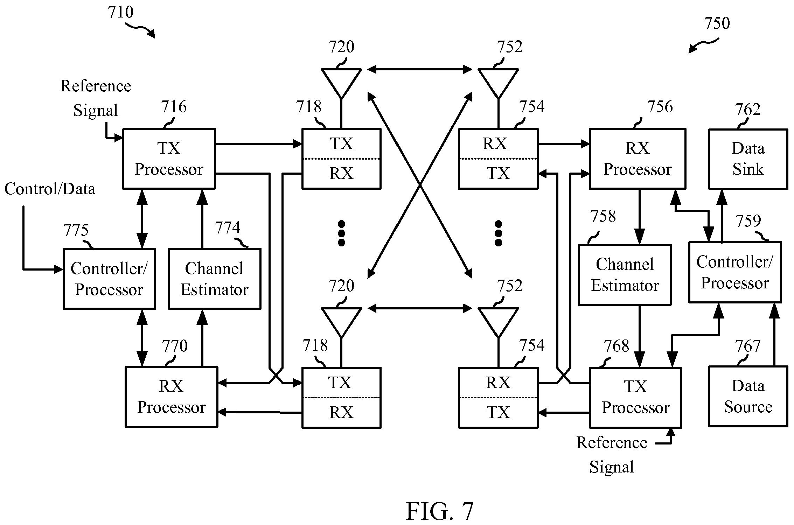

FIG. 7 is a block diagram of an eNodeB 710 in communication with a UE 750 in an access network. In the DL, upper layer packets from the core network are provided to a controller/processor 775. The controller/processor 775 implements the functionality of the L2 layer described earlier in connection with FIG. 6. In the DL, the controller/processor 775 provides header compression, ciphering, packet segmentation and reordering, multiplexing between logical and transport channels, and radio resource allocations to the UE 750 based on various priority metrics. The controller/processor 775 is also responsible for HARQ operations, retransmission of lost packets, and signaling to the UE 750.

The TX processor 716 implements various signal processing functions for the L1 layer (i.e., physical layer). The signal processing functions includes coding and interleaving to facilitate forward error correction (FEC) at the UE 750 and mapping to signal constellations based on various modulation schemes (e.g., binary phase-shift keying (BPSK), quadrature phase-shift keying (QPSK), M-phase-shift keying (M-PSK), M-quadrature amplitude modulation (M-QAM)). The coded and modulated symbols are then split into parallel streams. Each stream is then mapped to an OFDM subcarrier, multiplexed with a reference signal (e.g., pilot) in the time and/or frequency domain, and then combined together using an Inverse Fast Fourier Transform (IFFT) to produce a physical channel carrying a time domain OFDM symbol stream. The OFDM stream is spatially precoded to produce multiple spatial streams. Channel estimates from a channel estimator 774 may be used to determine the coding and modulation scheme, as well as for spatial processing. The channel estimate may be derived from a reference signal and/or channel condition feedback transmitted by the UE 750. Each spatial stream is then provided to a different antenna 720 via a separate transmitter 718TX. Each transmitter 718TX modulates an RF carrier with a respective spatial stream for transmission.

At the UE 750, each receiver 754RX receives a signal through its respective antenna 752. Each receiver 754RX recovers information modulated onto an RF carrier and provides the information to the receiver (RX) processor 756.

The RX processor 756 implements various signal processing functions of the L1 layer. The RX processor 756 performs spatial processing on the information to recover any spatial streams destined for the UE 750. If multiple spatial streams are destined for the UE 750, they may be combined by the RX processor 756 into a single OFDM symbol stream. The RX processor 756 then converts the OFDM symbol stream from the time-domain to the frequency domain using a Fast Fourier Transform (FFT). The frequency domain signal comprises a separate OFDM symbol stream for each subcarrier of the OFDM signal. The symbols on each subcarrier, and the reference signal, is recovered and demodulated by determining the most likely signal constellation points transmitted by the eNodeB 710. These soft decisions may be based on channel estimates computed by the channel estimator 758. The soft decisions are then decoded and deinterleaved to recover the data and control signals that were originally transmitted by the eNodeB 710 on the physical channel. The data and control signals are then provided to the controller/processor 759.

The controller/processor 759 implements the L2 layer described earlier in connection with FIG. 5. In the UL, the control/processor 759 provides demultiplexing between transport and logical channels, packet reassembly, deciphering, header decompression, control signal processing to recover upper layer packets from the core network. The upper layer packets are then provided to a data sink 762, which represents all the protocol layers above the L2 layer. Various control signals may also be provided to the data sink 762 for L3 processing. The controller/processor 759 is also responsible for error detection using an acknowledgement (ACK) and/or negative acknowledgement (NACK) protocol to support HARQ operations.

In the UL, a data source 767 is used to provide upper layer packets to the controller/processor 759. The data source 767 represents all protocol layers above the L2 layer (L2). Similar to the functionality described in connection with the DL transmission by the eNodeB 710, the controller/processor 759 implements the L2 layer for the user plane and the control plane by providing header compression, ciphering, packet segmentation and reordering, and multiplexing between logical and transport channels based on radio resource allocations by the eNodeB 710. The controller/processor 759 is also responsible for HARQ operations, retransmission of lost packets, and signaling to the eNodeB 710.

Channel estimates derived by a channel estimator 758 from a reference signal or feedback transmitted by the eNodeB 710 may be used by the TX processor 768 to select the appropriate coding and modulation schemes, and to facilitate spatial processing. The spatial streams generated by the TX processor 768 are provided to different antenna 752 via separate transmitters 754TX. Each transmitter 754TX modulates an RF carrier with a respective spatial stream for transmission.

The UL transmission is processed at the eNodeB 710 in a manner similar to that described in connection with the receiver function at the UE 750. Each receiver 718RX receives a signal through its respective antenna 720. Each receiver 718RX recovers information modulated onto an RF carrier and provides the information to a RX processor 770. The RX processor 770 implements the L1 layer.

The controller/processor 759 implements the L2 layer described earlier in connection with FIG. 6. In the UL, the control/processor 759 provides demultiplexing between transport and logical channels, packet reassembly, deciphering, header decompression, control signal processing to recover upper layer packets from the UE 750. Upper layer packets from the controller/processor 775 may be provided to the core network. The controller/processor 759 is also responsible for error detection using an acknowledgement (ACK) and/or negative acknowledgement (NACK) protocol to support HARQ operations.

The processing system 114 described in relation to FIG. 1 may include the eNodeB 710. In particular, the processing system 114 includes the TX processor 716, the RX processor 770, and the controller/processor 775. The processing system 114 described in relation to FIG. 1 may include the UE 750. In particular, the processing system 100 includes the TX processor 768, the RX processor 756, and the controller/processor 759.

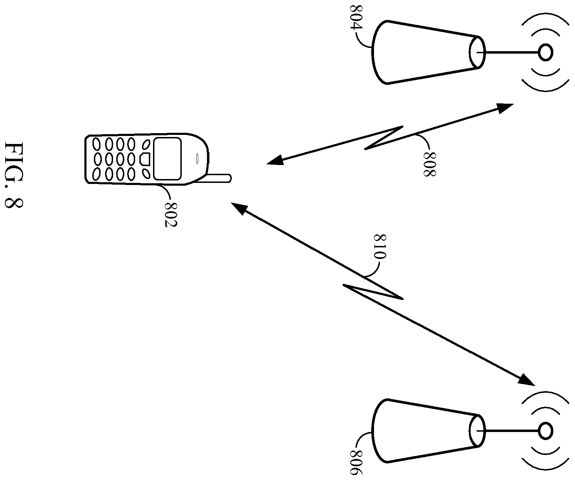

FIG. 8 illustrates a UE 802 receiving signals 808, 810 from a first transmitter 804 and a second transmitter 806. The first and second transmitters may correspond to first and second cells. The first and second transmitters may be, for example, first and second base stations. The cells may jointly send packets to the UE. The signals 808 and 810 received by the UE 802 may lack synchronization in time and/or frequency. This may be due to a time-of-flight difference from the first and second cells to the UE 802 or due to a lack of complete synchronization at the first and second cells. The time-of-flight difference causes a delay spread between the signals received at the UE 802 for the first and second cells. A delay spread in the time domain creates a highly frequency selective channel. The delay spread in time creates a phase ramp in the frequency domain. Although only two transmitters are shown in FIG. 8, the UE 802 may receive signals from any number of transmitters.

A phase ramp in time caused by a frequency offset in the frequency domain is a converse to the delay spread problem. The phase ramp in time may be caused by a frequency offset in the frequency domain. This creates a decorrelating channel in time, similar to a high Doppler shift channel. This causes any joint Channel Direction Information (CDI) feedback to be useless after a few milliseconds.

An offset between joint signals from a plurality of cells, in either the time or frequency domain, degrades the performance of various applications. Among others, these applications may include coherent joint processing, cooperative beamforming or non-coherent joint processing, cooperative silencing, relays, Multimedia Broadcast over a Single Frequency Network (MBSFN) operation, positioning, search and measurements, and intercell interference cancellation. Table 1 illustrates an exemplary time difference-of-arrival (TDOA) and delay spread for various applications.

**Table 1**

| **Application** | **Desired TDOA and Delay Spread** | **Desired Frequency Error at eNB** |
|---|---|---|
| CoMP: Coherent Joint Processing | ≤ 0.5 µs | ± 5 ppb |
| CoMP: Cooperative Beamforming or Non-Coherent Joint Processing | ≤ CP | ± 250 ppb |
| CoMP: Cooperative Silencing | ≤ CP | ± 250 ppb |
| Relays | ≤ CP | ± 250 ppb |
| MBSFN Operation | ≤ 16 µs | ± 50 ppb |
| | ≤ 33 µs | |
| Positioning (E-IPDL) | ½ OFDM symbol (35 µs) | ± 250 ppb |
| Search and Measurements | ≤ CP or | ± 250 ppb |
| | ≤ 0.5 ms | |
| Intercell Interference Cancellation | ≤ CP | ± 50 ppb |

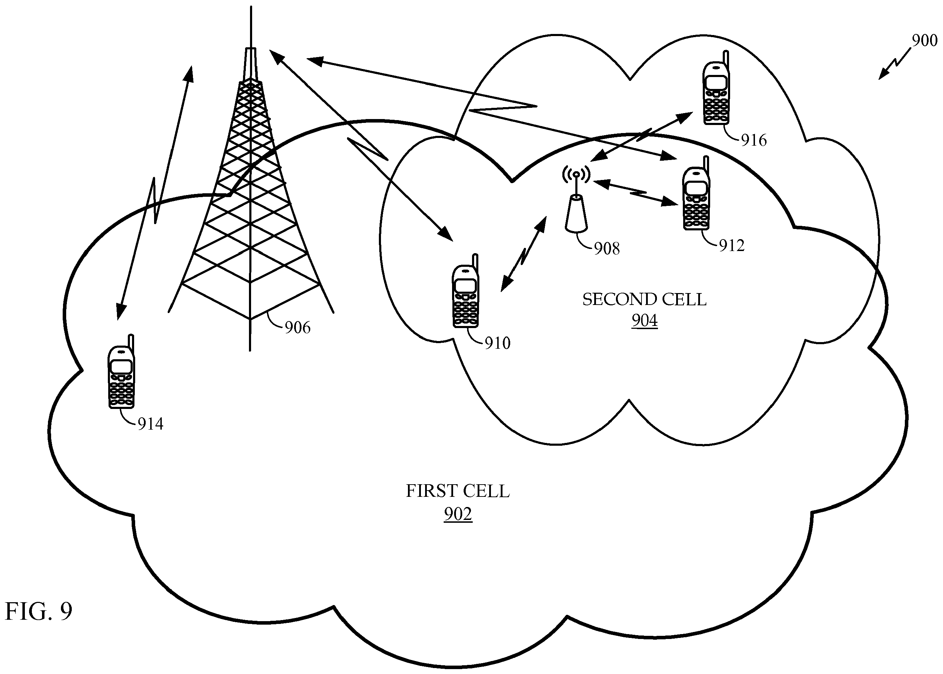

FIG. 9 illustrates that the first cell 902 and second cell 904 may be overlapping cells of different scale. For example, the first cell 902 may be a macro cell having base station 906, and the second cell 904 may be a pico cell or a femto cell transmitting via transmitter 908. The first and second cell may also have comparable scale with an overlapping transmission range. Although only two overlapping cells are illustrated, a UE may receive signals from any number of cells. FIG. 9 also illustrates that each cell may communicate with a plurality of UEs. These UEs may receive joint communication from the first cell 902 and the second cell 904, as illustrated for UE 910 and UE 912. The first and second cell may also communicate exclusively with a UE as illustrated for UE 914 and UE 916.

For example, CoMP Joint Processing involves multiple cells jointly sending packets to a UE. As described in connection with FIGS. 8-10, a delay spread may occur because of a time-of-flight difference between the signals from the multiple cells or because of a lack of synchronization between the cells. A lack of synchronization between the two signals reduces the signal performance for CoMP Joint Processing.

Beam forming involves concentrating transmission power on a strongest pipe in order to deliver a higher amount of data even with a weak wireless channel. Beamforming allows a signal to be focused in a direction at the transmitter side and to be coherently received at a receiver or UE. Beamforming is achieved via a digital processing technique referred to as precoding. Precoding involves sending a data stream with different weighting and phase shifting on different antennas. The transmitter determines the precoding based on its knowledge of the channel, which is obtained from the channel information feedback received from the receiver. A receiver then applies weighting and phase shifting to each signal from each of the receive antennas. The signals are combined coherently at the receiver, that is, signals are combined with time and phase aligned.

A delay spread, and phase ramp in the frequency domain, between multiple cells degrades the performance of joint beamforming because the effective beam received at the UE is different from the effective beam sent at the transmitter. Thus, the spread degrades the beam.

Interference cancellation is similarly degraded when a misalignment exists between two received signals. A misalignment in frequency increases the complexity of the interference cancellation and may degrade the performance. A misalignment in time reduces the ability for a UE to perform interference cancellation.

As described above in connection with FIGS. 8 and 9, a UE may receive a signal from a plurality of cells. In order to combat the effects of TDOA, the UE may measure synchronization parameters between the different cells and transmit a signal to at least one of the cells with information about the synchronization parameters. In response, the cell may determine an offset in the received synchronization parameters between itself and at least one other cell. The cell may then adjust a transmission waveform based on the determined offset.

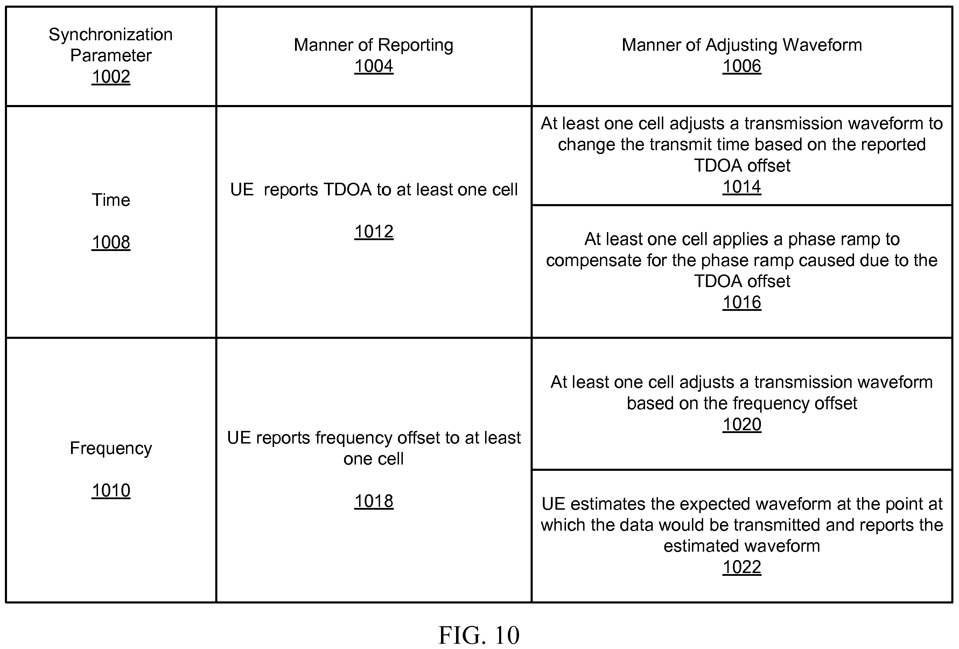

FIG. 10 illustrates exemplary implementations for reporting synchronization parameters and adjusting a transmission waveform based on the synchronization parameters. The synchronization parameters 1002 may include time 1008 and frequency 1010.

For a time based synchronization parameter 1008, a UE may measure a TDOA offset for a plurality of cells or base stations. The UE transmits a signal reporting the TDOA offset to at least one of the plurality of cells, 1012. At least one cell may adjust a transmission waveform based on the reported TDOA offset. For example, at least one cell may adjust a transmission waveform by adjusting the transmit time to reduce the TDOA offset at the UE, 1014. This becomes less feasible when multiple UEs are served by the cell. Another way to reduce the effects of TDOA is to apply a phase ramp at the cell to compensate for the phase ramp that occurs at the UE due to the TDOA, 1016. This may be easier to accomplish with dedicated reference signals, because the phase ramp will be transparent to the UE.

Applying a phase ramp in the frequency domain causes a result similar to adjusting the timing. For example, if a misalignment is within the space of a cyclic prefix (CP), a phase ramp may be applied, as in 1016. If a misalignment lasts beyond a symbol length, it may be preferable to adjust the transmit time, as in 1014.

The TDOA report transmitted from the UE may be quantized to an accuracy that is proportional to the bandwidth over which a Precoding Matrix Indicator (PMI) is reported. Thus, if a wideband Channel Direction Information (CDI) over 10MHz is used, a coarser granularity may be used for the TDOA report than when a subband CDI is used. If the PMI report is being reported over a large bandwidth, such as 10MHz, the accuracy of the timing may be reduced. This setting may be configured by an eNB. This setting may also be configured at the UE. This enables a trade off between the CDI accuracy and the number of bits needed for a TDOA feedback report.

For a frequency based synchronization parameter 1010, a UE may measure a frequency offset between signals received from a plurality of cells. The UE then reports information regarding the measured offset to at least one of the cells. In order to reduce the effects of the frequency offset, one of the cells may adjust a transmission waveform to reduce the frequency offset experienced at the UE 1020. For example, this information may be used to estimate how the CDI changes from the point at which it is reported to the point at which it is used. When joint processing or multi-cell beamforming is being used, frequency offset information reported from the UE provides information regarding a change in beam direction caused by a change in the transmit phase of one cell with respect to the other. The frequency offset causes the signals received at the UE to be misaligned. At least one of the cells may use the reported frequency offset to correct its beam direction so that the signals received from multiple cells are aligned when received at the UE.

Alternately, the UE may use the determined frequency offset to estimate the expected/original CDI at the point at which the data would be transmitted and report the estimated CDI, 1022.

One or more of the synchronization parameters may be reported from the UE at the same time. Based on the report, a transmission waveform may be adjusted at a base station for a cell. The propagation delay may be adjusted to reduce a time offset, and/or the oscillator frequency may be adjusted to reduce a frequency offset, as described above.

The synchronization parameters may be reported by the UE either on a periodic basis or based on a trigger. For a periodic basis, the UE may report the synchronization parameters each time a set amount of time elapses. The synchronization parameters may be reported, for example, every 100 ms. Alternately, the report may be triggered when a UE detects a lack of synchronization and/or when the UE detects a change in the synchronization parameters beyond a predetermined threshold. In this case, the UE measures the synchronization parameters between the plurality of cells and determines an offset in the measured synchronization parameters between the cells. When the UE determines that the offset is present or that the offset is above a threshold, the UE reports the synchronization parameters to at least one of the plurality of cells.

The synchronization parameter reports may be transmitted via L3 signaling or L1 signaling, as illustrated in connection with FIG. 6. When the reporting is accomplished via L1 signaling, the information about the synchronization parameters may be reported via the Physical Uplink Control Channel (PUCCH), the Physical Uplink Shared Channel (PUSCH), or via a new uplink channel. PUCCH and PUSCH typically include control information, as described in connection with FIG. 5. The reporting may also be accomplished by jointly coding the information regarding the synchronization parameters with the Channel Quality Indicator/Precoding Matrix Indicator (CQI/PMI) or with other control information.

As illustrated in FIG. 9, multiple UEs may receive a signal from each of the plurality of cells. In FIG. 9, UE 910 and UE 912 both receive signals from the first cell 902 and second cell 904. Therefore, each cell may receive reports with synchronization parameters from a plurality of UEs. The cell may then determine an average offset in the synchronization parameters received from the plurality of UEs and adjust a transmission waveform based on the determined average offset. For example, UE 910 may report a TDOA offset of 8 µs and UE 912 may report a TDOA offset of 9 µs. The cell may then adjust the transmission waveform corresponding to an average offset of 8.5 µs so that the offset is reduced for each of the multiple UEs.

Aspects may further include improving reception of a signal via the uplink. For example, a UE 912 may be tracking a first cell 902 in time and frequency controlled by the first cell. At times, it may be beneficial for a second cell 904 to receive and decode data from the UE 912. For example, the second cell 904 may receive a stronger uplink signal from the UE 912. As a TDOA difference and frequency offset may occur for signals received from the UE 912 by the first cell 902 and the second cell 904, an awareness of the frequency offset and/or time offset enables the second cell 904 to better decode the uplink signal from the UE 912. This allows the second cell to determine the time and frequency at which the UE 912 is transmitting the uplink signal. The second cell may receive the synchronization parameters in a number of ways. Among others, the second cell 904 may be informed of the Sounding Reference Signals (SRS) of the UE 912, the second cell 904 may receive a report with information regarding the synchronization parameters directly from the UE 912, and/or the second cell 904 may receive a report regarding the synchronization parameters from the first cell 902 after the first cell receive the report from the UE 912. Using the received synchronization parameters, the second cell 904 may use the signal received from the UE 912 and the received synchronization parameters to estimate the signal transmitted from the UE 912.

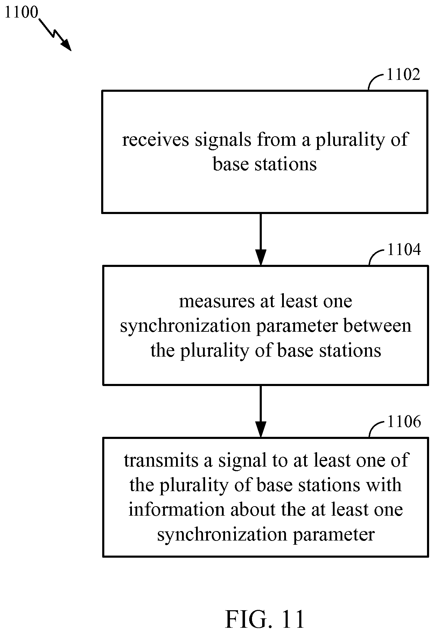

FIG. 11 is a flow chart 1100 of a method of wireless communication. The method receives signals from a plurality of base stations (1102). In addition, the method measures at least one synchronization parameter between the plurality of base stations (1104). Furthermore, the method transmits a signal to at least one of the plurality of base stations with information about the at least one synchronization parameter (1106).

The synchronization parameter may include a frequency offset and a time difference of arrival between the plurality of base stations. The method may further determine an offset in the measured synchronization parameter between the plurality of base stations and a module that determines whether the determined offset is above a threshold. The signal with information about the synchronization parameter is transmitted to the at least one of the plurality of the base stations only if the determined offset is above the threshold.

The plurality of base stations may include a serving base station and an adjacent base station, and transmitting the signal to at least one of the plurality of base stations may include transmitting the signal to the serving base station with information about the synchronization parameter.

On the other hand, the plurality of base stations may include a serving base station and an adjacent base station, and transmitting the signal to at least one of the plurality of base stations may include transmitting the signal to the adjacent base station with information about the synchronization parameter.

The synchronization parameter may include a frequency offset between the plurality of base stations, and the method may further estimate, at the user equipment, a signal at a time instance from which one of the plurality of base stations transmits a signal, and report the estimated signal.

The method may further receive an adjusted signal from at least one of the plurality of base stations. The adjusted signal has been adjusted to reduce an offset in the at least one synchronization parameter between the plurality of base stations measured at the user equipment.

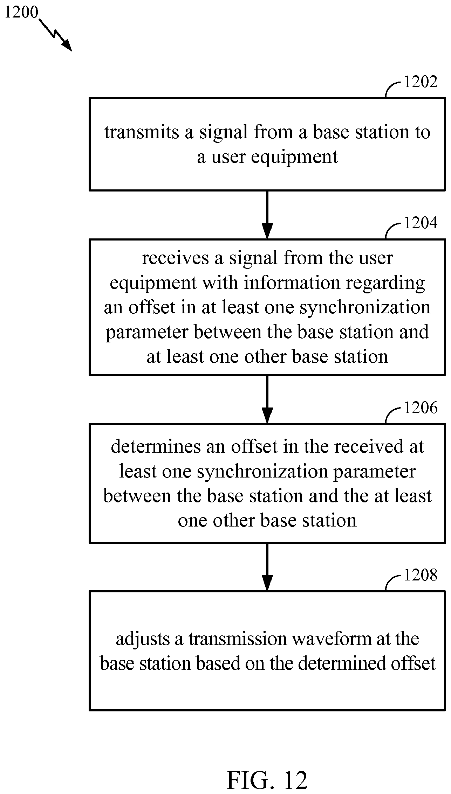

FIG. 12 is a flow chart 1200 of a method of wireless communication. The method transmits a signal from a base station to a user equipment (1202). In addition, the method receives a signal from the user equipment with information regarding an offset in at least one synchronization parameter between the base station and at least one other base station (1204). Furthermore, the method determines an offset in the received at least one synchronization parameter between the base station and the at least one other base station (1206). Additionally, the method adjusts a transmission waveform at the base station based on the determined offset (1208).

The signal may be, for example, a broadcast signal. The signal may be a reference signal, such as a pilot signal, that is conventionally used for time/frequency synchronization, channel estimation, etc. Among others, the signal may include one of a Common Reference Signal (CRS), a Primary Synchronization Signal/Secondary Synchronization Signal (PSS/SSS) as in LTE Release 8, and a Channel Signal Information-Reference Signal (CSI-RS) from LTE-A.

The method may further transmit a signal from the base station to a plurality of user equipment, receive a signal from each of the plurality of user equipment with information regarding at least one synchronization parameter between the base station and at least one other base station, determine an average offset in the at least one synchronization parameters received from the plurality of user equipment, and adjust the transmission waveform at the base station based on the determined average offset.

The method may further determine whether the determined offset is above a threshold and adjust a transmission waveform at the base station only when the determined offset is above the threshold.

The at least one synchronization parameter may be a frequency offset, and the adjustment to the transmission waveform at the base station may be based on the determined offset includes adjusting a transmission frequency for the base station based on the determined offset.

The at least one synchronization parameter may be a time difference of arrival between the plurality of base stations measured at the user equipment, and the adjustment to the transmission waveform at the base station may be based on the determined offset includes one of adjusting the transmission time for the base station and applying a phase ramp at the base station.

The at least one synchronization parameter may include both a frequency offset and a time difference of arrival between the plurality of base stations.

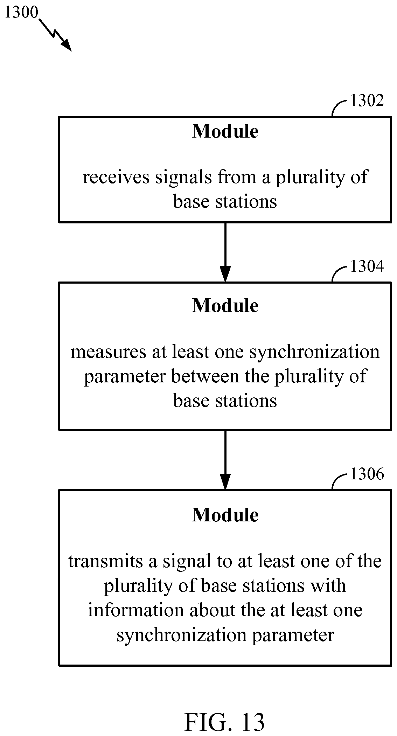

FIG. 13 is a conceptual block diagram 1300 illustrating the functionality of an exemplary apparatus 100. The apparatus 100 includes a module 1302 that receives signals from a plurality of base stations, a module 1304 that measures at least one synchronization parameter between the plurality of base stations, and a module 1306 that transmits a signal to at least one of the plurality of base stations with information about the at least one synchronization parameter.

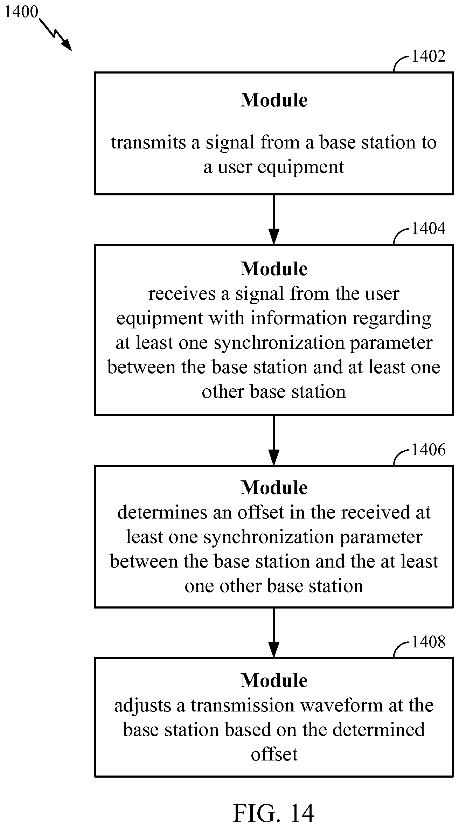

FIG. 14 is a conceptual block diagram 1400 illustrating the functionality of an exemplary apparatus 100. The apparatus 100 includes a module 1402 that transmits a signal from a base station to a user equipment, a module 1404 that receives a signal from the user equipment with information regarding at least one synchronization parameter between the base station and at least one other base station, a module 1406 that determines an offset in the received at least one synchronization parameter between the base station and the at least one other base station, and a module 1408 that adjusts a transmission waveform at the base station based on the determined offset.

Referring to FIG. 1 and FIG. 7, in one configuration, the apparatus 100 for wireless communication is a base station 710 and includes means for transmitting a signal from a base station to a user equipment, means for receiving a signal from the user equipment with information regarding at least one synchronization parameter between the base station and at least one other base station, means for determining an offset in the received at least one synchronization parameter between the base station and the at least one other base station, and means for adjusting a transmission waveform at the base station based on the determined offset. In one configuration, the apparatus 100 further includes means for transmitting a signal from the base station to a plurality of user equipment, means for receiving a signal from each of the plurality of user equipment with information regarding at least one synchronization parameter between the base station and at least one other base station, means for determining an average offset in the at least one synchronization parameter received from the plurality of user equipment, and means for adjusting the transmission waveform at the base station based on the determined average offset. In one configuration, the apparatus 100 further includes means for determining whether the determined offset is above a threshold, and means for adjusting a transmission waveform at the base station only when the determined offset is above the threshold. In one configuration, the means for adjusting the transmission waveform at the base station based on the determined offset in the apparatus 100 includes one of means for adjusting the transmission time for the base station and means for applying a phase ramp at the base station. The aforementioned means is the processing system 114 configured to perform the functions recited by the aforementioned means. As described *supra,* the processing system 114 includes the TX Processor 716, the RX Processor 770, and the controller/processor 775. As such, in one configuration, the aforementioned means may be the TX Processor 716, the RX Processor 770, and the controller/processor 775 configured to perform the functions recited by the aforementioned means.

In one configuration, the apparatus 100 for wireless communication is a UE 750 and includes means for receiving signals from a plurality of base stations, means for measuring at least one synchronization parameter between the plurality of base stations, means for transmitting a signal to at least one of the plurality of base stations with information about the at least one synchronization parameter. In one configuration, the apparatus 100 further includes means for determining an offset in the measured synchronization parameter between the plurality of base stations, and means for determining whether the determined offset is above a threshold. The signal with information about the synchronization parameter is transmitted to the at least one of the plurality of base stations only if the determined offset is above the threshold. In one configuration, the apparatus 100 further includes means for estimating, at the user equipment, a signal at a time instance from which one of the plurality of base stations transmits the signal, and means for reporting the estimated signal. In one configuration, the apparatus 100 further includes means for receiving an adjusted signal from at least one of the plurality of base stations. The adjusted signal has been adjusted to reduce an offset in the at least one synchronization parameter between the plurality of base stations measured at the user equipment. The aforementioned means is the processing system 114 configured to perform the functions recited by the aforementioned means. As described *supra,* the processing system 114 includes the TX Processor 768, the RX Processor 756, and the controller/processor 759. As such, in one configuration, the aforementioned means may be the TX Processor 768, the RX Processor 756, and the controller/processor 759 configured to perform the functions recited by the aforementioned means.

The invention is defined by the appended claims.

## Claims

1. A method (1100) of wireless communication, comprising:
receiving (1102) signals jointly transmitted from a plurality of base stations;
measuring (1104) synchronization parameters between the jointly transmitted signals received from the plurality of base stations; and
transmitting (1106) a signal to at least one of the plurality of base stations with information about the synchronization parameters;
wherein the synchronization parameters include both a frequency offset and a time difference of arrival between the plurality of base stations.

2. The method according to claim 1, further comprising:
determining an offset in at least one measured synchronization parameter between the plurality of base stations; and
determining whether the determined offset is above a threshold, wherein the signal with information about the synchronization parameters is transmitted to the at least one of the plurality of base stations only if the determined offset is above the threshold.

3. The method according to claim 1, wherein the plurality of base stations includes a serving base station and an adjacent base station, and wherein the transmitting the signal to at least one of the plurality of base stations includes transmitting the signal to the serving base station with information about the synchronization parameters.

4. The method according to claim 1, wherein the plurality of base stations includes a serving base station and an adjacent base station, and wherein the transmitting the signal to at least one of the plurality of base stations includes transmitting the signal to the adjacent base station with information about the synchronization parameters.

5. The method according to claim 1, further comprising:
receiving an adjusted signal from at least one of the plurality of base stations,
wherein the adjusted signal has been adjusted to reduce an offset in at least one synchronization parameter between the plurality of base stations measured at the user equipment.

6. An apparatus (1300) for wireless communication, comprising:
means (1302) for receiving signals jointly transmitted from a plurality of base stations;
means (1304) for measuring synchronization parameters between the jointly transmitted signals received from the plurality of base stations; and
means (1306) for transmitting a signal to at least one of the plurality of base stations with information about the synchronization parameters;
wherein the synchronization parameters include both a frequency offset and a time difference of arrival between the plurality of base stations.

7. A method (1200) of wireless communication, comprising:
transmitting (1202), jointly with at least one other base station, a signal from a base station to a user equipment;
receiving (1204) a signal from the user equipment with information about synchronization parameters between joint signals transmitted by the base station and by the at least one other base station;
determining (1206) an offset in the synchronization parameters between the joint signals transmitted by the base station and by the at least one other base station; and
adjusting (1208) a transmission waveform at the base station based on the determined offset;
wherein the synchronization parameters include both a frequency offset and a time difference of arrival between the plurality of base stations.

8. The method according to claim 7, further comprising:
transmitting a signal from the base station to a plurality of user equipment;
receiving a signal from each of the plurality of user equipment with information regarding at least one synchronization parameter between the base station and at least one other base station;
determining an average offset in the at least one synchronization parameters received from each of the plurality of user equipment; and
adjusting the transmission waveform at the base station based on the determined average offset.

9. The method according to claim 7, further comprising:
determining whether the determined offset is above a threshold; and
adjusting a transmission waveform at the base station only when the determined offset is above the threshold.

10. An apparatus (1400) for wireless communication, comprising:
means (1402) for transmitting, jointly with at least one other base station, a signal from a base station to a user equipment;
means (1404) for receiving a signal from the user equipment with information about synchronization parameters between joint signals transmitted by the base station and by the at least one other base station;
means (1406) for determining an offset in at least one of the synchronization parameters between the joint signals transmitted by the base station and by the at least one other base station; and
means (1408) for adjusting a transmission waveform at the base station based on the determined offset;
wherein the synchronization parameters include both a frequency offset and a time difference of arrival between the plurality of base stations.

11. A computer program product, comprising:
a computer-readable medium comprising code for performing the steps according to any of the claims 1-5 and/or 7-9.

## Patentansprüche

1. Verfahren (1100) zur drahtlosen Kommunikation, umfassend:
Empfangen (1102) von Signalen, die gemeinsam von einer Vielzahl von Basisstationen übertragen werden;
Messen (1104) von Synchronisationsparametern zwischen den gemeinsam übertragenen Signalen, die von der Vielzahl von Basisstationen empfangen werden; und
Übertragen (1106) eines Signals an mindestens eine der Vielzahl von Basisstationen mit Information über die Synchronisationsparameter;
wobei die Synchronisationsparameter sowohl einen Frequenzversatz als auch einen Laufzeitunterschied zwischen der Vielzahl von Basisstationen beinhalten.

2. Verfahren nach Anspruch 1, ferner umfassend:
Bestimmen eines Versatzes in mindestens einem gemessenen Synchronisationsparameter zwischen der Vielzahl von Basisstationen; und
Bestimmen, ob der bestimmte Versatz oberhalb eines Schwellenwerts liegt, wobei das Signal mit Information über die Synchronisationsparameter nur dann an die mindestens eine der Vielzahl von Basisstationen übertragen wird, wenn der bestimmte Versatz oberhalb des Schwellenwerts liegt.

3. Verfahren nach Anspruch 1, wobei die Vielzahl von Basisstationen eine bedienende Basisstation und eine benachbarte Basisstation beinhaltet, und wobei das Übertragen des Signals an mindestens eine der Vielzahl von Basisstationen Übertragen des Signals an die bedienende Basisstation mit Information über die Synchronisationsparameter beinhaltet.

4. Verfahren nach Anspruch 1, wobei die Vielzahl von Basisstationen eine bedienende Basisstation und eine benachbarte Basisstation beinhaltet, und wobei das Übertragen des Signals an mindestens eine der Vielzahl von Basisstationen Übertragen des Signals an die benachbarte Basisstation mit Information über die Synchronisationsparameter beinhaltet.

5. Verfahren nach Anspruch 1, ferner umfassend:
Empfangen eines eingestellten Signals von mindestens einer der Vielzahl von Basisstationen, wobei das eingestellte Signal angepasst wurde, um einen Versatz in mindestens einem Synchronisationsparameter zwischen der Vielzahl von Basisstationen zu reduzieren, die an der Benutzervorrichtung gemessen wurden.

6. Vorrichtung (1300) für drahtlose Kommunikation, umfassend:
Mittel (1302) zum Empfangen von Signalen, die gemeinsam von einer Vielzahl von Basisstationen übertragen werden;
Mittel (1304) zum Messen von Synchronisationsparametern zwischen den gemeinsam übertragenen Signalen, die von der Vielzahl von Basisstationen empfangen werden; und
Mittel (1306) zum Übertragen eines Signals an mindestens eine der Vielzahl von Basisstationen mit Information über die Synchronisationsparameter;
wobei die Synchronisationsparameter sowohl einen Frequenzversatz als auch einen Laufzeitunterschied zwischen der Vielzahl von Basisstationen beinhalten.

7. Verfahren (1200) zur drahtlosen Kommunikation, umfassend:
Übertragen (1202) eines Signals von einer Basisstation an eine Benutzervorrichtung gemeinsam mit mindestens einer anderen Basisstation;
Empfangen (1204) eines Signals von der Benutzereinrichtung mit Information über Synchronisationsparameter zwischen gemeinsamen Signalen, die von der Basisstation und der mindestens einen anderen Basisstation übertragen werden; Bestimmen (1206) eines Versatzes in den Synchronisationsparametern zwischen den von der Basisstation und der mindestens einen anderen Basisstation übertragenen gemeinsamen Signalen; und
Einstellen (1208) einer Übertragungswellenform an der Basisstation basierend auf dem bestimmten Versatz;
wobei die Synchronisationsparameter sowohl einen Frequenzversatz als auch einen Laufzeitunterschied zwischen der Vielzahl von Basisstationen beinhalten.

8. Verfahren nach Anspruch 7, ferner umfassend:
Übertragen eines Signals von der Basisstation an eine Vielzahl von Benutzergeräten;
Empfangen eines Signals von jeder der Vielzahl von Benutzergeräten mit Information über mindestens einen Synchronisationsparameter zwischen der Basisstation und mindestens einer anderen Basisstation;
Bestimmen eines durchschnittlichen Versatzes in den mindestens einen Synchronisationsparametern, die von jedem der Vielzahl von Benutzergeräten empfangen werden; und
Einstellen der Übertragungswellenform an der Basisstation basierend auf dem bestimmten durchschnittlichen Versatz.

9. Verfahren nach Anspruch 7, ferner umfassend:
Bestimmen, ob der bestimmte Versatz über einem Schwellenwert liegt; und
Einstellen einer Übertragungswellenform an der Basisstation nur dann, wenn der bestimmte Versatz über dem Schwellenwert liegt.

10. Vorrichtung (1400) für drahtlose Kommunikation, umfassend:
Mittel (1402) zum Übertragen eines Signals von einer Basisstation an eine Benutzervorrichtung gemeinsam mit mindestens einer anderen Basisstation;
Mittel (1404) zum Empfangen eines Signals von der Benutzereinrichtung mit Information über Synchronisationsparameter zwischen gemeinsamen Signalen, die von der Basisstation und der mindestens einen anderen Basisstation übertragen werden;
Mittel (1406) zum Bestimmen eines Versatzes in mindestens einem der Synchronisationsparameter zwischen den von der Basisstation und der mindestens
einen anderen Basisstation übertragenen gemeinsamen Signalen; und
Mittel (1408) zum Einstellen einer Übertragungswellenform an der Basisstation basierend auf dem bestimmten Versatz;
wobei die Synchronisationsparameter sowohl einen Frequenzversatz als auch einen Laufzeitunterschied zwischen der Vielzahl von Basisstationen beinhalten.

11. Computerprogrammprodukt, umfassend:
ein computerlesbares Medium, umfassend einen Code zum Ausführen der Schritte nach einem der Ansprüche 1-5 und/oder 7-9.

## Revendications

1. Un procédé (1100) de communication sans fil, comprenant :
la réception (1102) de signaux conjointement transmis depuis une pluralité de stations de base ;
la mesure (1104) de paramètres de synchronisation entre les signaux conjointement transmis reçus en provenance de la pluralité de stations de base ; et
la transmission (1106) d'un signal à destination d'au moins l'une de la pluralité de stations de base avec une information relative aux paramètres de synchronisation ;
dans lequel les paramètres de synchronisation incluent à la fois un décalage de fréquence et une différence de temps d'arrivée entre la pluralité de stations de base.

2. Le procédé selon la revendication 1, comprenant en outre :
la détermination d'un décalage dans au moins un paramètre de synchronisation mesuré entre la pluralité de stations de base ; et
la détermination si le décalage déterminé est supérieur à un seuil, dans lequel le signal avec une information relative aux paramètres de synchronisation est transmis à destination de l'au moins une de la pluralité de stations de base uniquement si le décalage déterminé est supérieur au seuil.

3. Le procédé selon la revendication 1, dans lequel la pluralité de stations de base inclut une station de base de desserte et une station de base adjacente, et dans lequel la transmission du signal à destination d'au moins l'une de la pluralité de stations de base inclut la transmission du signal à destination de la station de base de desserte avec une information relative aux paramètres de synchronisation.

4. Le procédé selon la revendication 1, dans lequel la pluralité de stations de base inclut une station de base de desserte et une station de base adjacente, et dans lequel la transmission du signal à destination d'au moins l'une de la pluralité de stations de base inclut la transmission du signal à destination de la station de base adjacente avec une information relative aux paramètres de synchronisation.

5. Le procédé selon la revendication 1, comprenant en outre :
la réception d'un signal ajusté en provenance d'au moins l'une de la pluralité de stations de base,
dans lequel le signal ajusté a été ajusté pour réduire un décalage d'au moins un paramètre de synchronisation entre la pluralité de stations de base mesuré à l'équipement d'utilisateur.

6. Un appareil (1300) de communication sans fil, comprenant :
des moyens (1302) pour la réception de signaux conjointement transmis depuis une pluralité de stations de base ;
des moyens (1304) pour la mesure de paramètres de synchronisation entre les signaux conjointement transmis reçus en provenance de la pluralité de stations de base ; et
des moyens (1306) pour la transmission d'un signal à destination d'au moins l'une de la pluralité de stations de base avec une information relative aux paramètres de synchronisation ;
dans lequel les paramètres de synchronisation incluent à la fois un décalage de fréquence et une différence de temps d'arrivée entre la pluralité de stations de base.

7. Un procédé (1200) de communication sans fil, comprenant :
la transmission (1202), conjointement avec au moins une autre station de base, d'un signal depuis une station de base à destination d'un équipement d'utilisateur ;
la réception (1204) d'un signal en provenance de l'équipement d'utilisateur avec une information relative à des paramètres de synchronisation entre des signaux conjoints transmis par la station de base et par l'au moins une autre station de base ;
la détermination (1206) d'un décalage des paramètres de synchronisation entre les signaux conjoints transmis par la station de base et par l'au moins une autre station de base ; et
l'ajustement (1208) d'une forme d'onde de transmission à la station de base sur la base du décalage déterminé ;
dans lequel les paramètres de synchronisation incluent à la fois un décalage de fréquence et une différence de temps d'arrivée entre la pluralité de stations de base.

8. Le procédé selon la revendication 7, comprenant en outre :
la transmission d'un signal depuis la station de base à destination d'une pluralité d'équipements d'utilisateur ;
la réception d'un signal en provenance de chacun de la pluralité d'équipements d'utilisateur avec une information relative à au moins un paramètre de synchronisation entre la station de base et au moins une autre station de base ;
la détermination d'un décalage moyen de l'au moins un paramètre de synchronisation reçu en provenance de chacun de la pluralité d'équipements d'utilisateur ; et
l'ajustement de la forme d'onde de transmission à la station de base sur la base du décalage moyen déterminé.

9. Le procédé selon la revendication 7, comprenant en outre :
la détermination si le décalage déterminé est supérieur à un seuil ; et
l'ajustement d'une forme d'onde de transmission à la station de base uniquement lorsque le décalage déterminé est au-dessus du seuil.

10. Un appareil (1400) de communication sans fil, comprenant :
des moyens (1402) pour la transmission, conjointement avec au moins une autre station de base, d'un signal depuis une station de base à destination d'un équipement d'utilisateur ;
des moyens (1404) pour la réception d'un signal en provenance de l'équipement d'utilisateur avec une information relative à des paramètres de synchronisation entre des signaux conjoints transmis par la station de base et par l'au moins une autre station de base ;
des moyens (1406) pour la détermination d'un décalage d'au moins l'un des paramètres de synchronisation entre les signaux conjoints transmis par la station de base et par l'au moins une autre station de base ; et
des moyens (1408) pour l'ajustement d'une forme d'onde de transmission à la station de base sur la base du décalage déterminé ;
dans lequel les paramètres de synchronisation incluent à la fois un décalage de fréquence et une différence de temps d'arrivée entre la pluralité de stations de base.

11. Un produit de programme informatique, comprenant :
un support lisible par ordinateur comprenant un code pour effectuer les étapes selon l'une quelconque des revendications 1 à 5 et/ou 7 à 9.
